# EUROPÄISCHE PATENTSCHRIFT

(11) **EP 2 944 204 B1**
(45) Veröffentlichungstag und Bekanntmachung des Hinweises auf die Patenterteilung: **20.07.2022**
(21) Anmeldenummer: 14167854.0
(22) Anmeldetag: 12.05.2014
(51) Int. Cl.: A23L 27/20, A24B 15/30

(54) **Synthetische Gewürznelkenpartikel**
Synthetic clove particles
Particules de girofle synthétiques

(43) Veröffentlichungstag der Anmeldung: 18.11.2015
(73) Patentinhaber: Symrise AG, 37603 Holzminden (DE)
(72) Erfinder: Hilmer, Jens-Micheal, 37603 Holzminden (DE); Sabater, Christopher, 37603 Holzminden (DE); Elenschläger, Sergej, 37603 Holzminden (DE); Batalia, Martina, 37691 Boffzen (DE); Schoppmeier, Thomas, 37603 Holzminden (DE); Lindner, Ingo, 37603 Holzminden (DE)
(74) Vertreter: Fabry, Bernd

(56) Entgegenhaltungen:
- EP-A2- 1 252 831
- WO-A2-90/00019
- US-A- 4 785 833

## Beschreibung

### GEBIET DER ERFINDUNG

Die Erfindung befindet sich auf dem Gebiet der Tabakprodukte und betrifft synthetische Partikel, die in Form, Farbe und Eigenschaften zerkleinerten Gewürznelkenstückchen entsprechen.

### STAND DER TECHNIK

Zu den bekanntesten und beliebtesten Rauchwaren, die im südostasiatischen Raum, besonders in Indonesien verbreitet sind, gehören Nelkenzigaretten, die auch als *Kretek* bezeichnet werden. Neben Tabak enthalten diese geschrotete Gewürznelken sowie je nach Region zusätzlich auch Kräuter und Fruchtextrakte.

Kreteks *wurden* um 1880 von Haji Jamahri in der Stadt Kudus erstmals produziert. Der Wirkstoff Eugenol, der in Gewürznelken enthalten ist, sollte sein Asthma lindern. Tatsächlich hörten Jamahris Lungenprobleme auf und er begann damit, seine Erfindung in seinem Dorf zu vermarkten. Heutzutage beschäftigen Kretek-Hersteller allein in Indonesien über 180.000 Menschen. Bekannte, in Europa erhältliche Kretekmarken sind *Gudang Garam* (mit Zimt und gezuckertem Filter), *Djarum* und *Sampoerna.*

Neben dem speziellen Aroma zeichnen sich Nelkenzigaretten vor allem auch dadurch aus, dass sie beim Abbrennen vernehmlich Knackgeräusche - das so genannte "Crackling" - abgeben, das sie als Tabakwaren unverwechselbar macht.

Gewürznelken sind ein teurer Rohstoff, so dass gerade in Zeiten, in denen Hersteller Schwierigkeiten haben bei steigenden Tabakpreisen die Herstellungskosten für Rauchwaren konstant zu halten, ein großes Interesse an Alternativprodukten besteht, die auf synthetischem Wege zu deutlich niedrigeren Kosten hergestellt und eingekauft werden können. Hauptaugenmerk dabei ist jedoch, dass diese Alternativen im Vergleich mit den originalen geschroteten Gewürznelken zumindest gleichwertig abschneiden.

Aus der EP 1252831 B1 (GIVAUDAN) sind Ersatzprodukte für geschrotete Gewürznelken bekannt, die ebenfalls in Kreteks eingesetzt werden können, bei denen es sich um Pflanzenöle oder Aromen handelt, die in einer Kohlenhydratmatrix eingeschlossen sind. Für viele Anwendungen ist die Anwesenheit von Ölen und Aromen jedoch unerwünscht, da man diese wenn überhaupt dem Tabak vorzugsweise separat zumischt. Andererseits werden gemäß der vorliegenden Lehre diese Komponenten jedoch benötigt, um überhaupt ein Crackling zu bewirken.

Die WO 90/00019 A2 betrifft ein Verfahren zur Herstellung einer Zigarettenfüllung, die Tabak und ein teilweise faserhaltiges Kräuter- oder Gewürzadditiv enthält (z.B. Gewürznelken). Die US 4 785 833 A offenbart ein Verfahren zur Aromatisierung von Tabak. Der Tabak kann in Form von Blättern, Partikeln, Pulver vorliegen. Gemäß dieses Verfahrens wird der Tabak mit einem Aromastoff und einer wässrigen Lösung eines wasserlöslichen Trägers und einem Emulgator gesprüht.

Das Problem, Partikel zu entwickeln, die ein Crackling beim Abbrennen hervorrufen, wird auch in der GB 12884151 A (IFF) angesprochen. Zu diesem Zweck werden dem Tabak verkapselte Duftstoffe zugesetzt. Für den gleichen Anwendungszweck werden in der US 3,540,456 (NCR) ebenfalls verkapselte Geschmacksstoffe in einer Polysaccharidmatrix vorgeschlagen. In beiden Fällen ist jedoch die Anwesenheit von Aromen obligatorisch; außerdem zeigen vergleichsversuche, dass die Crackling-Intensität mit der von originalen Nelkenstückchen nicht zu vergleichen ist.

Die Aufgabe der vorliegenden Erfindung hat somit darin bestanden, einen Ersatzstoff für Nelkenstückchen zur Verfügung zu stellen, der diesen im Hinblick auf Form, Farbe und insbesondere den Eigenschaften beim Verbrennen ("Crackling" siehe **[0006])** nicht nur nahe kommt, sondern mindestens ebenbürtig ist. Eine weitere Aufgabe hat darin bestanden, insbesondere auch solche Alternativprodukte zu entwickeln, die beim Verbrennen dem Crackling von geschroteten Gewürznelken gleich kommen, jedoch weder pflanzliche Öle noch Aromen enthalten müssen.

### BESCHREIBUNG DER ERFINDUNG

Gegenstand der Erfindung sind synthetische Gewürznelkenpartikel, enthaltend
(a) 45 bis 70 Gew.-% Stärke;
(b) 5 bis 30 Gew.-% Dextrine;
(c) 5 bis 15 Gew.-% Polyole;
(d) 0 bis 25 Gew.-% Triglyceride;
(e) 0 bis 5 Gew.-%Farbstoffe;
(f) 0 bis 40 Gew.-% Aromen;
wobei sich die Mengenangaben mit Wasser zu 100 Gew.-% ergänzen.

Überraschenderweise wurde gefunden, dass Partikel, die im Wesentlichen aus Stärke, Dextrinen und einer geringen Menge Polyolen bestehen und dabei einen Mindestgehalt an Wasser aufweisen Produkte erzeugen welche infolge ihres definierten Restwassergehaltes beim Verbrennen ein Crackling generieren, dass dem von Kretek nicht nur gleich kommt, sondern sogar deutlich übertrifft.

Ein besonderer Vorteil der Erfindung besteht darin, dass die Produkte die Anwesenheit von Ölen und/oder Aromen nicht erfordern. Nichtsdestotrotz können diese Stoffe anwesend sein, wenn dies aus anwendungstechnischen Gründen, beispielsweise um ein weiteres Saucieren der Zigaretten zu vermeiden, sinnvoll erscheint.

### ZUSAMMENSETZUNG DER PARTIKEL

Die Partikel, können dadurch erhalten werden, dass man zunächst eine wässrige Zubereitung oder Aufschlämmung der Inhaltsstoffe herstellt und diese dann definiert trocknet und entweder gleichzeitig oder anschließend gegebenenfalls zerkleinert.

### STÄRKEN

Als Komponente (a) enthalten die Partikel Stärken.

Kartoffeln enthalten etwa 75 % Wasser, 21 % Stärke und 4 % andere Substanzen. Zur Herstellung von Kartoffelstärke werden sie traditionell auf schnell rotierenden, mit Sägezähnen besetzten Zylindern unter Zufluss von Wasser möglichst fein zerrieben. Daraufhin wäscht man den Brei, in welchem die Zellen möglichst vollständig zerrissen, die Stärkekörner also bloßgelegt sein sollten, aus einem Metallsieb, auf dem Bürsten langsam rotieren, mit Wasser aus. Bei größeren Betrieben benutzt man kontinuierlich wirkende Apparate, bei denen der Brei durch eine Kette allmählich über ein langes, geneigt liegendes Sieb transportiert und dabei ausgewaschen und das auf den schon fast erschöpften Brei fließende Wasser, welches also nur sehr wenig Stärkemehl aufnimmt, auch noch auf frischen Brei geleitet wird. Der ausgewaschene Brei (Pülpe) enthält 80-95 % Wasser, in der Trockensubstanz aber noch etwa 60 % Stärke und dient als Viehfutter, auch zur Stärkezucker-, Branntwein- und Papierherstellung; das Waschwasser hat man zum Berieseln der Wiesen benutzt, doch gelang es auch, die stickstoffhaltigen Bestandteile des Kartoffelfruchtwassers als Viehfutter zu verwerten. Da die Pülpe noch sehr viel Stärke enthält, zerreibt man sie zwischen Walzen, um alle Zellen zu öffnen, und wäscht sie noch einmal aus. Nach einer anderen Methode schneidet man die Kartoffeln in Scheiben, befreit sie durch Mazeration in Wasser von ihrem Saft und schichtet sie mit Reisigholz oder Horden zu Haufen, in welchen sie bei einer Temperatur von 30-40 °C in etwa acht Tagen vollständig verrotten und in eine lockere, breiartige Masse verwandelt werden, aus welcher die Stärke leicht ausgewaschen werden kann. Das von den Sieben abfließende Wasser enthält die Saftbestandteile der Kartoffeln gelöst und Stärke und feine Fasern, die durch das Sieb gegangen sind, suspendiert. Man rührt dieses Wasser in Bottichen auf, lässt es kurze Zeit stehen, damit Sand und kleine Steinchen zu Boden fallen können, lässt es dann durch ein feines Sieb fließen, um gröbere Fasern zurückzuhalten, und bringt es dann in einen Bottich, in welchem sich die Stärke und auf ihr die Faser ablagert. Die obere Schicht des Bodensatzes wird deshalb nach dem Ablassen des Wassers entfernt und als Schlammstärke direkt verwertet oder weiter gereinigt, indem man sie auf einem Schüttelsieb aus feiner Seidengaze, durch deren Maschen die Stärke, aber nicht die Fasern hindurchgehen, mit viel Wasser auswäscht. Die Hauptmasse der Stärke wird im Bottich wiederholt mit reinem Wasser angerührt und nach jedesmaligem Absetzen von der oberen unreinen Stärke befreit. Man kann auch die rohe Stärke mit Wasser durch eine sehr schwach geneigte Rinne fließen lassen, in deren oberem Teil sich die schwere reine Stärke ablagert, während die leichteren Fasern von dem Wasser weiter fortgeführt werden.

Oft benutzt man auch Zentrifugalmaschinen, in welchen sich die schwere Stärke zunächst an der senkrechten Wand der schnell rotierenden Siebtrommel ablagert, während die leichte Faser noch im Wasser suspendiert bleibt. Das Wasser aber entweicht durch die Siebwand, und man kann schließlich die Stärke aus der Zentrifugalmaschine in festen Blöcken herausheben, deren innere Schicht die Faser bildet. Die feuchte (grüne) Stärke, welche etwa 33-45 % Wasser enthält, wird ohne weiteres zu Traubenzucker verarbeitet, für alle anderen Zwecke aber auf Filterpressen oder auf Platten aus gebranntem Gips, die begierig Wasser einsaugen, auch unter Anwendung der Luftpumpe entwässert und bei einer Temperatur unter 60 °C getrocknet. Man bringt sie in Brocken oder, zwischen Walzen zerdrückt und gesiebt, als Mehl in den Handel. Bisweilen wird die feuchte Stärke mit etwas Kleister angeknetet und durch eine durchlöcherte eiserne Platte getrieben, worauf man die erhaltenen Stängel auf Horden trocknet. Um einen gelblichen Ton der Stärke zu verdecken, setzt man ihr vor dem letzten Waschen etwas Ultramarin zu.

Weizenstärke wird aus weißem, dünnhülsigem, mehligem Weizen hergestellt. Dieser enthält etwa 58-64 % Stärke, außerdem etwa 10 % Kleber und 3-4 % Zellstoff, welcher hauptsächlich die Hülsen des Korns bildet. Die Eigenschaften des Klebers bedingen die Abweichungen der Weizenstärkefabrikation von der Gewinnung der Stärke aus Kartoffeln. Nach dem traditionellen Halleschen oder Sauerverfahren weicht man den Weizen in Wasser, zerquetscht ihn zwischen Walzen und überlässt ihn, mit Wasser übergossen, der Gärung, die durch Sauerwasser aus einem früheren Prozess eingeleitet wird und Essig- und Milchsäure liefert, in welcher sich der Kleber löst oder wenigstens seine zähe Beschaffenheit so weit verliert, dass man nach 10-20 Tagen in einer siebartig durchlöcherten Waschtrommel die Stärke abscheiden kann. Das aus der Trommel abfließende Wasser setzt in einem Bottich zunächst Stärke, dann eine innige Mischung von Stärke mit Kleber und Hülsenteilchen (Schlichte, Schlammstärke), zuletzt eine schlammige, vorwiegend aus Kleber bestehende Masse ab. Diese Rohstärke wird ähnlich wie die Kartoffelstärke gereinigt und dann getrocknet, wobei sie zu Pulver zerfällt oder, wenn sie noch geringe Mengen Kleber enthält, die so genannte Strahlenstärke liefert, die von den Normalverbrauchern irrtümlich für besonders rein gehalten wird.

Nach dem traditionellen Elsässer Verfahren wird der gequollene Weizen durch aufrechte Mühlsteine unter starkem Wasserzufluss zerquetscht und sofort ausgewaschen. Das abfließende Wasser enthält neben Stärke viel Kleber und Hülsenteilchen und wird entweder der Gärung überlassen und dann wie beim vorigen Verfahren weiter verarbeitet, oder direkt in Zentrifugalmaschinen gebracht, wo viel Kleber abgeschieden und eine Rohstärke erhalten wird, die man durch Gärung etc. weiter reinigt. Die bei diesem Verfahren erhaltenen Rückstände besitzen beträchtlich höheren landwirtschaftlichen Wert als die bei dem Halleschen Verfahren entstehenden. Will man aber den Kleber noch vorteilhafter verwerten, so macht man aus Weizenmehl einen festen, zähen Teig und bearbeitet diesen nach etwa einer Stunde in Stücken von 1 kg in einem rinnenförmigen Trog unter Zufluss von Wasser mit einer leicht kannelierten Walze. Hierbei wird die Stärke aus dem Kleber ausgewaschen und fließt mit dem Wasser ab, während der Kleber als zähe, fadenziehende Masse zurück bleibt.

Reis enthält 70-75 % Stärke neben 7-9 % unlöslichen, eiweißartigen Stoffen, die aber durch Einweichen des Reises in ganz schwacher Natronlauge größtenteils gelöst werden. Man zerreibt den Reis dann in einer Mühle unter beständigem Zufluss schwacher Lauge, behandelt den Brei in einem Bottich anhaltend mit Lauge und Wasser, lässt kurze Zeit absetzen, damit sich gröbere Teile zu Boden senken, und zieht das Wasser, in welchem reine Stärke suspendiert ist, ab. Aus dem Bodensatz wird die Stärke in einem rotierenden Siebzylinder durch Wasser ausgewaschen, worauf man sie durch Behandeln mit Lauge und Abschlämmen vom Kleber befreit. Die zuerst erhaltene reinere Stärke lässt man absetzen, entfernt die obere unreine Schicht, behandelt das Übrige auf der Zentrifugalmaschine und trocknet die reine Stärke.

Mais weicht man vier- bis fünfmal je 24 Stunden in Wasser von 35 °C, wäscht ihn und lässt ihn dann durch zwei Mahlgänge gehen. Das Mehl fällt in eine mit Wasser gefüllte Kufe mit Flügelrührer und gelangt aus dieser auf Seidengewebe, das nur die grobe Kleie zurückhält. Das mit der Stärke beladene, durch das Gewebe hindurchgegangene Wasser gelangt in Tröge, dann durch zwei feine Gewebe und endlich auf wenig geneigte, 80-100 m lange Schiefertafeln, auf welchen sich die Stärke ablagert. Das abfließende, nur noch Spuren von Stärke enthaltende Wasser lässt man stehen und presst den Absatz zu Kuchen, um ihn als Viehfutter zu verwenden.

Auch aus Rosskastanien kann Stärke gewonnen werden, doch ist diese nur für technische Zwecke verwendbar, da ein ihr anhaftender Bitterstoff durch Behandeln mit Natriumcarbonat kaum vollständig entfernt werden kann. Die Ausbeute beträgt 19-20 %. Die handelsübliche Stärke dagegen enthält etwa 80-84 % reine Stärke, 14-18 % Wasser und in den billigeren Sorten bis 5 % Kleber, 2,5 % Fasern und 1,3 % Asche, während der Aschengehalt in den besten Sorten nur 0,01 % beträgt.

Besonders bevorzugt ist der Einsatz von Reisstärke oder Maisstärke. Die Stärken sind vorzugsweise in Mengen von etwa 25 bis etwa 65 Gew.-% und insbesondere etwa 30 bis etwa 40 Gew.-% zugegen.

### DEXTRINE

Als Komponente (b) enthalten die Partikel Dextrine bzw. Maltodextrine. Dabei handelt es sich um Stärkeabbauprodukte, die von ihrer Molekülgröße her zwischen Oligosacchariden und Stärke liegen. Üblicherweise kommen sie in Form von weißem bzw. hellgelbem Pulver vor. Sie werden hauptsächlich aus Weizen-, Kartoffel-, Tapioka- oder Maisstärke durch trockene Erhitzung (>150 °C) oder unter Säureeinwirkung gewonnen. In der Natur wird Dextrin zum Beispiel von *Bacterium macerans* erzeugt. Dextrine entstehen auch durch den enzymatischen Abbau von Stärke durch Amylase. Bevorzugt sind Dextrine mit 1 bis 20 und insbesondere 2 bis 10 Dextrose-Äquivalenten (DE-Einheiten). Die Dextrine sind vorzugsweise in Mengen von etwa 1 bis etwa 25 Gew.-% und insbesondere etwa 5 bis etwa 15 Gew.-% zugegen.

### POLYOLE

Schließlich enthalten die Partikel als Komponente (c) Polyole, die ausgewählt sein können aus der Gruppe, die gebildet wird von Zuckeralkoholen Glycerin, Ethylenglykol, Propylenglykol, Diethylenglykol und Dipropylenglykol sowie deren Gemischen. Besonders bevorzugt ist hier der Einsatz von Glycerin. Die Polyole sind vorzugsweise in Mengen von etwa 3 bis etwa 10 Gew.-% zugegen.

### TRIGLYCERIDE

In einer bevorzugten Ausführungsform können die Partikel als weitere Komponente (d) Triglyceride enthalten. Für diesen Zweck eignen sich grundsätzlich alle Pflanzenöle, die eine Jodzahl oberhalb von 50 aufweisen, wie beispielsweise Rapsöl, Sojaöl, Distelöl, Sonnenblumenöl, Leinöl, Olivenöl und dergleichen. Die Triglyceride können in Mengen von etwa 0 bis etwa 25 Gew.-%, vorzugsweise etwa 1 bis etwa 20 Gew.-% und insbesondere etwa 2 bis etwa 10 Gew.-% - enthalten sein.

### FARBSTOFFE

In einer nächsten bevorzugten Ausführungsform können die Partikel als weitere Komponente (e) Farbstoffe enthalten. Die Auswahl dieser Stoffe ist weitgehend unkritisch und orientiert sich ausschließlich an ihrer Zulässigkeit für die entsprechende Anwendung sowie dem gewünschten Farbeffekt. Besonders bevorzugt sind wegen der Ähnlichkeit zu Gewürznelken und des Preises Tee-Extrakt und Zuckercouleur.

Die Partikel können die Farbstoffe in Mengen von etwa 0,1 bis 5 Gew.-% und vorzugsweise etwa 0,5 bis etwa 2,5 Gew.-% enthalten.

### AROMEN

In einer nächsten bevorzugten Ausführungsform können die Partikel als weitere Komponente (f) Aromen enthalten. Die Auswahl dieser Zusatzstoffe ist ebenfalls unkritisch und richtet sich allein nach dem angestrebten Geruchserlebnis.

In Betracht kommen beispielsweise: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Eugenylacetat, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Wegen der geruchlichen Ähnlichkeit zu Gewürznelken ist vor allem der Einsatz von Eugenol, Eugenylacetat und Caryophyllen bevorzugt. Diese sind als Hauptbestandteile des etherischen Öls der Gewürznelke bekannt.

Die Partikel können die Aromen in Mengen von etwa 0,01 bis etwa 40 Gew.-% und vorzugsweise etwa 0,5 bis etwa 20 Gew.-% enthalten.

Die Bestandteile (a) bis (c) sowie gegebenenfalls (d) bis (f) werden in Wasser aufgeschlämmt um eine homogene Mischung zu ergeben. Üblicherweise enthalten sie dann etwa 5 bis etwa 60 Gew.-% und vorzugsweise etwa 8 bis etwa 45 Gew.-% Wasser.

Typischerweise setzen sich die Partikel in Summe wie folgt zusammen:
(a) etwa 25 bis etwa 65 Gew.-%, vorzugsweise etwa 25 bis etwa 50 Gew.-% und insbesondere etwa 30 bis etwa 40 Gew.-% Stärke;
(b) etwa 1 bis etwa 25 Gew.-%, vorzugsweise etwa 5 bis etwa 20 Gew.-% und insbesondere etwa 5 bis etwa 15 Gew.-% Dextrine;
(c) etwa 3 bis etwa 10 Gew.-% und vorzugsweise etwa 4 bis etwa 6 Gew.-% Polyole;
(d) etwa 0 bis etwa 25 Gew.-%, vorzugsweise etwa 1 bis etwa 20 Gew.-% und insbesondere etwa 2 bis etwa 10 Gew.-% Triglyceride;
(e) etwa 0,1 bis etwa 5 Gew.-%, vorzugsweise etwa 0,5 bis 2,5 Gew.-% Farbstoffe; und
(f) etwa 0 bis etwa 40 Gew.-%, vorzugsweise etwa 0,5 bis 20 Gew.-% Aromen,
wobei sich die Mengenangaben mit mindestens 5-60 Gew.-% und je nach Trocknungsart vorzugsweise etwa 8 bis etwa 45 Gew.-% Wasser sowie weiteren Bestandteilen zu 100 Gew.-% ergänzen.

### ZUSAMMENSETZUNG DER PARTIKEL

Die trockenen Zubereitungen in Partikelform setzen sich wie folgt zusammen:
(a) etwa 45 bis etwa 70 Gew.-% Stärke;
(b) etwa 5 bis etwa 30 Gew.-% Dextrine;
(c) etwa 5 bis etwa 15 Gew.-% Polyole;
(d) 0 bis etwa 25 Gew.-% Triglyceride;
(e) 0 bis etwa 5 Gew.-% Farbstoffe;
(f) 0 bis etwa 40 Gew.-% Aromen;
wobei sich Mengenangaben mit Wasser zu 100 Gew.-% ergänzen.

### HERSTELLVERFAHREN

Ein weiterer Gegenstand der Erfindung betrifft Verfahren zur Herstellung von synthetische Gewürznelkenpartikeln, welches sich dadurch auszeichnet, dass man wässrige Zubereitungen enthaltend
(a) etwa 25 bis etwa 65 Gew.-% Stärke,
(b) etwa 1 bis etwa 25 Gew.-% Dextrine und
(c) etwa 3 bis etwa 10 Gew.-% Polyole,
wobei sich die Mengenangaben mit etwa 5 bis etwa 60 Gew.-% Wasser und eventuell weiteren Bestandteilen zu 100 Gew.-% ergänzen, trocknet und gegebenenfalls zerkleinert. Die Zubereitungen können die oben genannten weiteren Inhaltsstoffe in den jeweils bevorzugten Mengen enthalten; eine Wiederholung dieser Ausführungsformen ist an dieser Stelle nicht erforderlich.

### TROCKNUNG UND ZERKLEINERUNG

Die wässrigen Zubereitungen können nach der Homogenisierung durch einen Ultraturrax oder dergleichen, beispielsweise durch Sprühtrocknung, Vakuumbandtrocknung, Walzentrocknung oder Extrusion entwässert werden.

Trocknung bedeutet dabei nicht, dass das Wasser vollständig entzogen wird. Es wird vielmehr ein Restwassergehalt von etwa 1 bis etwa 20 Gew.-%, vorzugsweise von etwa 2 bis etwa 15 Gew.-% und insbesondere von etwa 3 bis etwa 10 Gew.-% eingestellt, der für die Eigenschaften der Partikel kritisch ist. Dabei hat es sich im Hinblick auf die Crackling-Intensität als bevorzugt erwiesen, Partikel mit Gehalten an Ölen und/oder Aromen eher in Richtung von etwa 5 bis etwa 9 Gew.-% Wasser einzustellen, während Partikel, die ohne Öl und Aromen auskommen, deutlich weniger Wasser aufweisen können.

Die angesprochenen Trockenverfahren stellen Standardverfahren der technischen Chemie dar und bedürfen daher keiner detaillierten Erläuterung, da sie dem Fachmann hinreichend geläufig sind. Im Hinblick auf die Charakteristik der Partikel haben sich jedoch spezielle Trockentemperaturen als vorteilhaft erwiesen; es sind dies:
Sprühtrocknung bei 90 bis 200 °C
Vakuumbandtrocknung bei 60 bis 160 °C
Walzentrockung bei 100 bis 150 °C
Extrusion bei 80 bis 140 °C

Nach der Trocknung werden die Teilchen auf eine mittlere Partikelgröße im Bereich von etwa 0,01 bis 10 mm eingestellt. Vorzugsweise liegt der D50-Wert im Bereich von etwa 0,8 bis etwa 5,5 mm. Dies bedeutet, dass 50 % aller Teilchen in einer homogenen Probe innerhalb dieses Durchmesserbereiches liegen. Sprühgetrocknete Produkte bedürfen in der Regel keiner Zerkleinerung, da sie bereits als Granulate anfallen. Hier kann jedoch eine Siebung nützlich sein, um die bevorzugte Größenverteilung einzustellen. Bei den übrigen Verfahren können die getrockneten Massen gegebenenfalls mechanisch zerkleinert werden, beispielsweise durch ein nachgeschaltetes Vermahlen oder aber bei Extrusion durch eine Düse mit Hilfe von rotierenden Messern.

### BEISPIELE

### Herstellbeispiele 1 bis 5, Vergleichsbeispiel V1

Verschiedene wässrige Zubereitungen mit und ohne Öle und/oder Aromen wurden durch Vermischen der Bestandteile hergestellt und anschließend nach unterschiedlichen Verfahren entwässert:
Rezeptur 1 : Vakuumbandtrocknung bei 60 bis 160°C
Rezeptur 2: Sprühtrocknung bei 90 bis 200 °C
Rezeptur 3 und 4: Walzentrockung bei 100 bis 150 °C
Rezeptur 5: Extrusion bei 80 bis 140 °C

Die Rezepturen 1, 3 und 4 wurden anschließend vermahlen und wiesen einen D50 von etwa 3,5 mm auf. Die Zusammensetzungen sind **Tabelle 1** zu entnehmen. Als Vergleich V1 dienen originale zerkleinerte Gewürznelkenstückchen.

**T**

**abelle 1**

| Zusammensetzung der zu trocknenden Slurries und Eigenschaften der Partikel - Mengenangaben als Gew.-% | | | | | | |
|---|---|---|---|---|---|---|
| **Komponente** | **1** | **2** | **3** | **4** | **5** | **V1^{∗}** |
| ***Zusammensetzung der Slurries vor der Trocknung*** | | | | | | |
| Rapsöl | - | - | 5,0 | - | - | |
| Nelkenaroma | - | 6,9 | - | 10,0 | 10 | |
| Schwarzteeextrakt | - | - | - | - | 4,0 | |
| Glycerin | - | - | 5,0 | 5,0 | 8,5 | |
| Zuckercouleur | 1,5 | 1,5 | 1,5 | 1,5 | - | |
| Dextrin | 10,0 | 6,9 | 10,0 | 10,0 | 10,0 | |
| Stärke | 10,0 | 6,9 | 32,7 | 37,2 | 62,5 | |
| Maltodextrin | 22,7 | 15,6 | - | - | - | |
| Wasser | Ad 100 | | | | | |

| ***Partikel nach Trocknung und Zerkleinerung*** | | | | | | |
|---|---|---|---|---|---|---|
| Wassergehalt [Gew.-%] | 6,9 | 3,1 | 2,7 | 8,9 | 8,8 | n. b. |
| Crackling | +++ | + | ++ | +++ | ++ | + |

| | | | | | | |
|---|---|---|---|---|---|---|
| ^{∗}) original zerkleinerte Gewürznelkenstückchen | | | | | | |

Anschließend wurden die getrockneten und gegebenenfalls zerkleinerten Partikel bezüglich ihrer akustischen Eigenschaften beim Verbrennen beurteilt. Dies erfolgte zum einen durch subjektive Begutachtung auf einer Skala von (+) = Standard von Original-Kreteks, (++) = leichte Verbesserung gegenüber dem Standard und (+++) = deutliche Verbesserung gegenüber dem Standard.

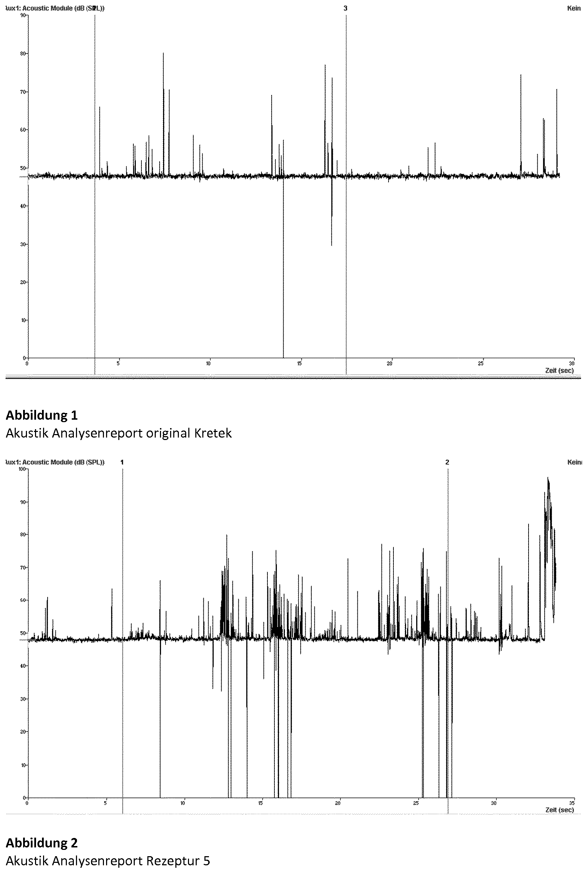

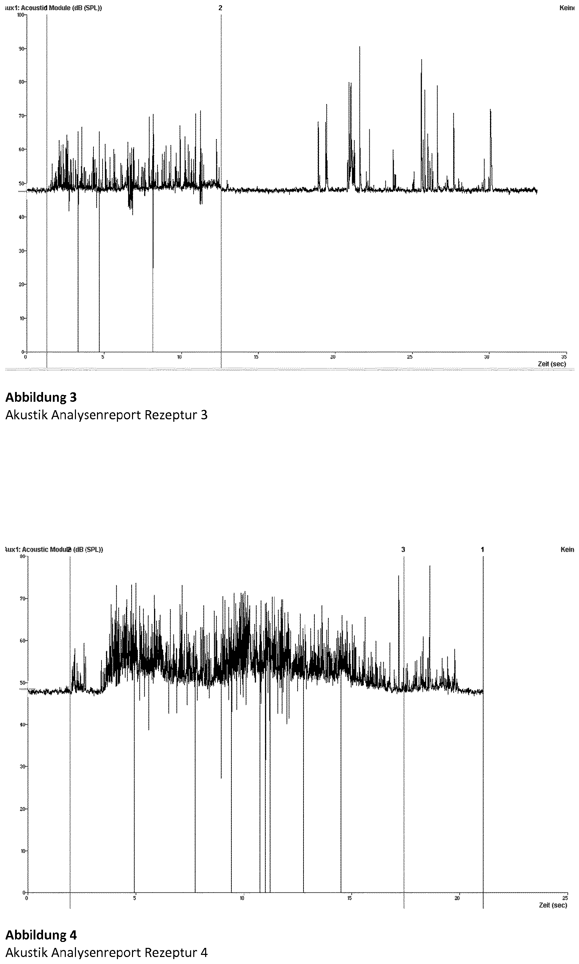

Zum anderen wurden die Proben mit einem Texture-Analyser TA.XT.plus inklusive Acoustic Envelope Detector aus dem Hause Stable Micro Systems vermessen. Die **Abbildungen 1 bis 5** zeigen Akustik Analysenreports, wobei die Intensität und Häufigkeit des Crackling während des Abbrennens der Probe wiedergespiegelt wird.

Wie zu erkennen, zeigen alle synthetischen Partikel ein Crackling das dem natürlicher Gewürznelkenstückchen nicht nur gleich kommt, sondern dies sogar übertrifft.

## Patentansprüche

1. Synthetische Gewürznelkenpartikel, enthaltend
(a) 45 bis 70 Gew.-% Stärke;
(b) 5 bis 30 Gew.-% Dextrine;
(c) 5 bis 15 Gew.-% Polyole;
(d) 0 bis 25 Gew.-% Triglyceride;
(e) 0 bis 5 Gew.-%Farbstoffe;
(f) 0 bis 40 Gew.-% Aromen;
wobei sich Mengenangaben mit Wasser zu 100 Gew.-% ergänzen.

2. Partikel nach Anspruch 1, **dadurch gekennzeichnet, dass** die Partikel als Stärke beispielsweise, jedoch nicht ausschließlich Reis- und/oder Maisstärke enthalten.

3. Partikel nach mindestens einem der Ansprüche 1 bis 2, **dadurch gekennzeichnet, dass** die Partikel Dextrine mit DE-Werten im Bereich von 2 bis 10 enthalten.

4. Partikel nach mindestens einem der Ansprüche 1 bis 3, **dadurch gekennzeichnet, dass** die Partikel Polyole enthalten, die ausgewählt sind aus der Gruppe, die gebildet wird von Zuckeralkoholen, Glycerin, Ethylenglykol, Propylenglykol, Diethylenglykol und Dipropylenglykol sowie deren Gemischen.

5. Partikel nach mindestens einem der Ansprüche 1 bis 4, **dadurch gekennzeichnet, dass** die Partikel als weitere Komponente (d) Triglyceride enthalten.

6. Partikel nach den Ansprüchen 5, **dadurch gekennzeichnet, dass** die Partikel die Triglyceride in Mengen von 0 bis 25 Gew.-% enthalten.

7. Partikel nach mindestens einem der Ansprüche 1 bis 6, **dadurch gekennzeichnet, dass** die Partikel als weitere Komponente (e) Farbstoffe enthalten.

8. Partikel nach Anspruch 7, **dadurch gekennzeichnet, dass** die Partikel die Farbstoffe in Mengen von etwa 0,1 bis etwa 5 Gew.-% enthalten.

9. Partikel nach mindestens einem der Ansprüche 1 bis 8, **dadurch gekennzeichnet, dass** die Partikel als weitere Komponente (g) Aromen enthalten.

10. Partikel nach Anspruch 9, **dadurch gekennzeichnet, dass** die Partikel die Aromen in Mengen von 0 bis 40 Gew.-% enthalten.

11. Verfahren zur Herstellung von synthetische Gewürznelkenpartikeln nach Anspruch 1, **dadurch gekennzeichnet, dass** man wässrige Zubereitungen enthaltend
(a) 25 bis 65 Gew.-% Stärke,
(b) 1 bis 25 Gew.-% Dextrine und
(c) 3 bis 10 Gew.-% Polyole
wobei sich die Mengenangaben mit 5 bis 60 Gew.-% Wasser und eventuell weiteren Bestandteilen zu 100 Gew.-% ergänzen, trocknet und gegebenenfalls zerkleinert.

12. Verfahren nach Anspruch 11, **dadurch gekennzeichnet, dass** man die wässrigen Zubereitungen durch Sprühtrocknung, Vakuumbandtrocknung, Walzentrocknung oder Extrusion entwässert.

13. Verfahren nach den Ansprüchen 11 und/oder 12, **dadurch gekennzeichnet, dass** man die Partikel beim Trocknen auf eine Restfeuchte von 1 bis 20 Gew.-% Wasser einstellt.

14. Verfahren nach mindestens einem der Ansprüche 11 bis 13, **dadurch gekennzeichnet, dass** man die Partikel auf eine mittlere Partikelgröße D50 im Bereich von 0,01 bis 10 mm einstellt.

## Claims

1. Synthetic clove particles, comprising
(a) 45 to 70 % by weight starch;
(b) 5 to 30 % by weight dextrins;
(c) 5 to 15 % by weight polyols;
(d) 0 to 25 % by weight triglycerides;
(e) 0 to 5 % by weight colourants;
(f) 0 to 40% by weight aroma substances;
wherein the amounts with water add up to 100 wt.%.

2. Particles according to claim 1, **characterized in that** the particles contain as starch, for example, but not exclusively, rice starch and/or maize starch.

3. Particles according to at least one of claims 1 to 2, **characterized in that** the particles contain dextrins with DE values in the range from 2 to 10.

4. Particles according to at least one of claims 1 to 3, **characterized in that** the particles contain polyols which are selected from the group consisting of sugar alcohols, glycerol, ethylene glycol, propylene glycol, diethylene glycol and dipropylene glycol and their mixtures.

5. Particles according to at least one of claims 1 to 4, **characterized in that** the particles contain triglycerides as a further component (d).

6. Particles according to claim 5, **characterized in that** the particles contain the triglycerides in amounts from 0 to ca. 25 % by weight.

7. Particles according to at least one of claims 1 to 6, **characterized in that** the particles contain colourants as a further component (e).

8. Particles according to claim 7, **characterized in that** the particles contain the colourants in amounts of 0.1 to 5 % by weight.

9. Particles according to at least one of claims 1 to 8, **characterized in that** the particles contain aroma substances as a further component (g).

10. Particles according to claim 9, **characterized in that** the particles contain the aroma substances in amounts of 0 to 40 % by weight.

11. Process for the production of synthetic clove particles according to claim 1, **characterized in that** aqueous preparations containing
(a) 25 to 65% by weight starch,
(b) 1 to 25% by weight dextrins and
(c) 3 to 10% by weight of polyols
wherein the amounts with 5 to 60% by weight of water and optionally further constituents add up to 100% by weight, are dried and optionally comminuted.

12. Process according to claim 11, **characterized in that** the aqueous preparations are dehydrated by spray drying, vacuum belt drying, roller drying, or extrusion.

13. Process according to claims 11 and/or 12, **characterized in that** the particles are adjusted to a residual moisture of 1 to 20% by weight of water during drying.

14. Process according to at least one of claims 11 to 13, **characterized in that** the particles are adjusted to a mean particle size D50 in the range of 0.01 to 10 mm.

## Revendications

1. Particules de clou de girofle de synthèse, contenant
(a) 45 à 70 % en poids d'amidon ;
(b) 5 à 30 % en poids de dextrines ;
(c) 5 à 15 % en poids de polyols ;
(d) 0 à 25 % en poids de triglycérides ;
(e) 0 à 5 % en poids de colorants ;
(f) 0 à 40 % en poids d'aromes ;
le complément à 100 % en poids étant constitué d'eau.

2. Particules selon la revendication 1, **caractérisées en ce que** les particules contiennent en tant qu'amidon, par exemple, mais pas exclusivement, de l'amidon de riz et/ou de maïs.

3. Particules selon au moins l'une des revendications 1 à 2, **caractérisées en ce que** les particules contiennent des dextrines ayant des valeurs DE dans la plage de 2 à 10.

4. Particules selon au moins l'une des revendications 1 à 3, **caractérisées en ce que** les particules contiennent des polyols qui sont choisis dans le groupe consistant en les alcools de sucre, le glycérol, l'éthylèneglycol, le propylèneglycol, le diéthylèneglycol et le dipropylèneglycol, ainsi que les mélanges de ceux-ci.

5. Particules selon au moins l'une des revendications 1 à 4, **caractérisées en ce que** les particules contiennent des triglycérides en tant que composant supplémentaire (d).

6. Particules selon la revendication 5, **caractérisées en ce que** les particules contiennent les triglycérides en des quantités de 0 à 25 % en poids.

7. Particules selon au moins l'une des revendications 1 à 6, **caractérisées en ce que** les particules contiennent des colorants en tant que composant supplémentaire (e).

8. Particules selon la revendication 7, **caractérisées en ce que** les particules contiennent les colorants en des quantités d'environ 0,1 à environ 5 % en poids.

9. Particules selon au moins l'une des revendications 1 à 8, **caractérisées en ce que** les particules contiennent des aromes en tant que composant supplémentaire (g).

10. Particules selon la revendication 9, **caractérisées en ce que** les particules contiennent les aromes en des quantités de 0 à 40 % en poids.

11. Procédé de fabrication de particules de clou de girofle de synthèse selon la revendication 1, **caractérisé en ce qu'**on sèche et éventuellement broie des préparations aqueuses contenant :
(a) 25 à 65 % en poids d'amidon,
(b) 1 à 25 % en poids de dextrines et
(c) 3 à 10 % en poids de polyols,
le complément à 100 % étant constitué de 5 à 60 % en poids d'eau et des éventuels constituants supplémentaires.

12. Procédé selon la revendication 11, **caractérisé en ce qu'**on déshydrate les compositions aqueuses par séchage par atomisation, séchage à bande sous vide, séchage au tambour ou extrusion.

13. Procédé selon la revendication 11 et/ou 12, **caractérisé en ce qu'**on ajuste les particules, lors du séchage, à une humidité résiduelle de 1 à 20 % en poids d'eau.

14. Procédé selon au moins l'une des revendications 11 à 13, **caractérisé en ce qu'**on ajuste les particules à une granulométrie D50 dans la plage de 0,01 à 10 mm.
